# EUROPÄISCHE PATENTSCHRIFT

(11) **EP 1 805 058 B1**
(45) Veröffentlichungstag und Bekanntmachung des Hinweises auf die Patenterteilung: **26.03.2008**
(21) Anmeldenummer: 05798090.6
(22) Anmeldetag: 21.09.2005
(51) Int. Cl.: B60N 2/235

(54) **VERSTELLVORRICHTUNG UND FAHRZEUGSITZ**
ADJUSTING MECHANISM AND VEHICLE SEAT
DISPOSITIF DE REGLAGE ET SIEGE DE VEHICULE

(30) Priorität: 01.10.2004 DE 102004048349
(43) Veröffentlichungstag der Anmeldung: 11.07.2007
(73) Patentinhaber: Johnson Controls GmbH, 51399 Burscheid (DE)
(72) Erfinder: WEBER, Frank, 51519 Odenthal (DE)
(74) Vertreter: Hemmelmann, Klaus
(86) Internationale Anmeldenummer: PCT/EP2005/010191
(87) Internationale Veröffentlichungsnummer: WO 2006/037470

(56) Entgegenhaltungen:
- EP-A2- 1 291 236
- DE-A1- 19 522 854
- DE-A1- 19 845 698
- US-A1- 2002 089 224

## Beschreibung

Die Erfindung betrifft eine Verstellvorrichtung, insbesondere eine Neigungsverstellvorrichtung für die Rückenlehne eines Fahrzeugsitzes, mit einem auf einer ersten Baugruppe angeordneten Bolzen und einer mittels dieses Bolzens drehbar gelagerten zweiten Baugruppe, auf welche eine Kraft (F) radial zur Drehachse ausübbar ist.

### Stand der Technik

Eine gattungsgemäße Verstellvorrichtung ist aus der Druckschrift DE 198 45 698 A1 bekannt. Die dort beschriebene Neigungsverstellvorrichtung für die Rückenlehne eines Fahrzeugsitzes besteht aus einer ersten, mit der Rückenlehne verbundenen Befestigungslasche und einer zweiten, am Sitzteil angeordneten Befestigungslasche, die drehbar miteinander verbunden sind. Ein kreisbogenförmiger Umfangsbereich der zweiten Befestigungslasche ist mit einer Verzahnung versehen, mit welcher eine auf der ersten Befestigungslasche drehbar gelagerte Rastklinke in Eingriff bringbar ist. Infolge dieses zur Verstellung lösbaren Eingriffs ist die Winkelstellung zwischen Rückenlehne und Sitzteil festlegbar. Ein mittels eines Bolzens gleichfalls auf der ersten Befestigungslasche drehbar angeordneter Sperrnocken verhindert die ungewollte Entriegelung der Rastklinke. Sowohl in normalem Gebrauch, insbesondere jedoch bei einer unfallbedingten Überlast, wirkt eine Kraft radial zur Drehachse des Sperrnockens auf den Bolzen ein. Konstruktiv wird dabei eine Belastungsgrenze vorgegeben, bis zu welcher die Klemmkraft des Sperrnockens erhalten und somit die Rückenlehne in ihrer eingestellten Position fixiert bleibt.

### Aufgabe

Der Erfindung liegt die Aufgabe zugrunde, die Sicherheit einer gattungsgemäßen Verstelleinrichtung mit geringem Aufwand zu verbessern.

### Lösung

Die Aufgabe wird erfindungsgemäß dadurch gelöst, dass bei einer gattungsgemäßen Vorrichtung die Drehbarkeit der zweiten Baugruppe relativ zur ersten Baugruppe durch einen mittels plastischer Verformung herbeiführtbaren Formschluß zwischen dem Bolzen und der ersten Baugruppe und/oder der zweiten Baugruppe herabsetzbar ist. Die unfallbedingte Überlast, die grundsätzlich die Verstellvorrichtung zu entriegeln versucht, initiiert somit gleichzeltig (irreversible) Mittel, die dieser Entriegelung entgegenwirken.

Der Bolzen kann dabei drehfest mit der ersten Baugruppe verbunden sein, wobei und der Formschluß zwischen dem Bolzen und der zweiten Baugruppe herbeiführbar ist. Alternativ ist denkbar, den Bolzen drehfest mit der zweiten Baugruppe zu verbinden und den Formschluß zwischen dem Bolzen und der ersten Baugruppe herbeizuführen.

Der Formschluß ist vorzugsweise dadurch herbeiführbar, dass der Bolzen in einer an ihrem Innenumfang zumindest partiell verzahnten Bohrung in der ersten oder zweiten Baugruppe drehbar gelagert ist. Mit Vorteil weist dabei der Innenumfang der Bohrung zumindest im Bereich der Verzahnung eine größere Härte als der Außenumfang des Bolzens auf. Beim Auftreten der Überlast graben sich die Zähne in den Bolzen ein und behindern dessen Drehung relativ zur Bohrung. Unter normalen Gebrauchslasten hingegen ist die Drehbewegung ungestört. Darüber hinaus ist es grundsätzlich möglich, die Verstelleinrichtung nach dem Abklingen der Überlast wieder zu entriegeln, beispielsweise um Fahrzeugpassagieren durch Vorklappen der Rückenlehne ein Verlassen des Fahrzeugs zu ermöglichen.

Die Verzahnung ist vorzugsweise in einem Segment des Innenumfangs der Bohrung angeordnet, auf dessen Kreisbogen der Kraftangriffspunkt der Kraft F unter Überlast etwa mittig angeordnet ist. Dabei erstreckt sich das verzahnte Segment beidseits des Kraftangriffspunkts mit Vorteil über einen Winkel kleiner 45°, vorzugsweise etwa 30°. In diesem Winkelbereich entfaltet die Verzahnung ihre größte Wirkung.

Nach einer bevorzugten Ausführungsform der Erfindung ist die Verstellvorrichtung ein Rastneigungsversteller für die Rückenlehne eines Kraftfahrzeugsitzes, wobei die erste Baugruppe eine mit der Rückenlehne verbundene erste Befestigungslasche und die zweite Baugruppe ein Sperrnocken ist, mittels dessen eine auf der ersten Befestigungslasche drehbar gelagerte Rastklinke in Eingriff mit der Verzahnung einer zweiten, gegenüber der ersten schwenkbaren Befestigungslasche haltbar ist.

### Figuren

Die Figuren stellen beispielhaft und schematisch eine Ausführung der Erfindung dar.

Es zeigen:

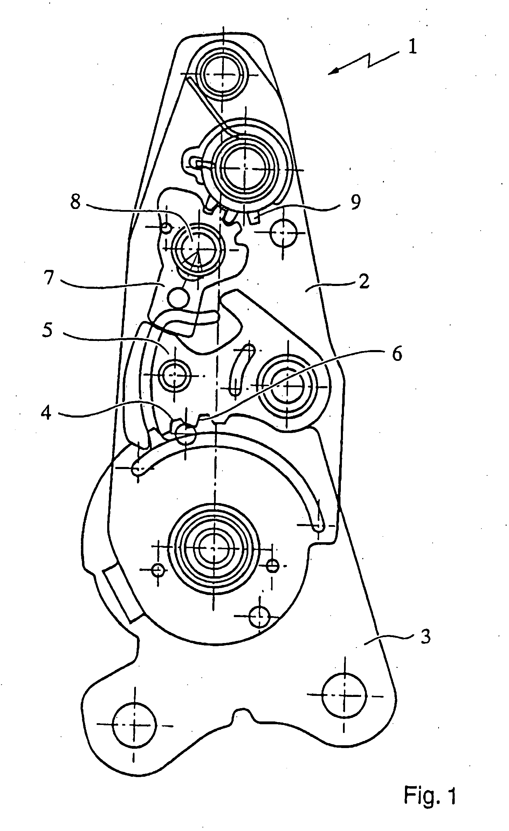

- Fig. 1: eine seitliche Ansicht einer erfindungsgemäßen Meigungsverstellvorrichtung,
- Fig.2: eine vergrößerte Darstellung des Sperrnockens der Neigungsverstellvorrichtung nach Fig. 1,
- Fig. 3: eine nochmals vergrößerte Abbildung der Verzahnung im Sperrnocken aus Fig. 1 und 2.

Die Verstellvorrichtung 1 besteht aus einer ersten Befestigungslasche 2 für die Anbringung an der nicht dargestellten Rückenlehne sowie aus einer zweiten Befestigungslasche 3 zur Befestigung am gleichfalls nicht gezeigten Sitzteil des Fahrzeugsitzes. Die zweite Befestigungslasche 3 ist auf ihrem Außenumfang partiell mit einer Verzahnung 4 versehen. Auf der ersten Befestigungslasche 2 (erste Baugruppe) ist eine Rastklinke 5 drehbar angeordnet, die mit einer Gegenverzahnung 6 in formschlüssigen Eingriff mit der Verzahnung 4 gebracht werden kann. Das Sperren in der Verriegelungsstellung sowie das Entriegeln der Rastklinke 5 erfolgen durch einen Sperrnocken 7 (zweite Baugruppe), der auf einem aus der ersten Befestigungslasche 2 auskragenen, starren Bolzen 8 schwenkbar gelagert ist. Der Antrieb des Sperrnockens 7 erfolgt durch ein Zahnglied 9. Hinsichtlich der Funktion derartiger Verstellvorrichtungen wird ausdrücklich auf die bereits zitierte Druckschrift DE 198 45 698 A1 sowie, bezüglich der Ausbildung des Zahnglieds 9, auf die noch unveröffentlichte Patentanmeldung DE 103 12 136.6-16 verwiesen.

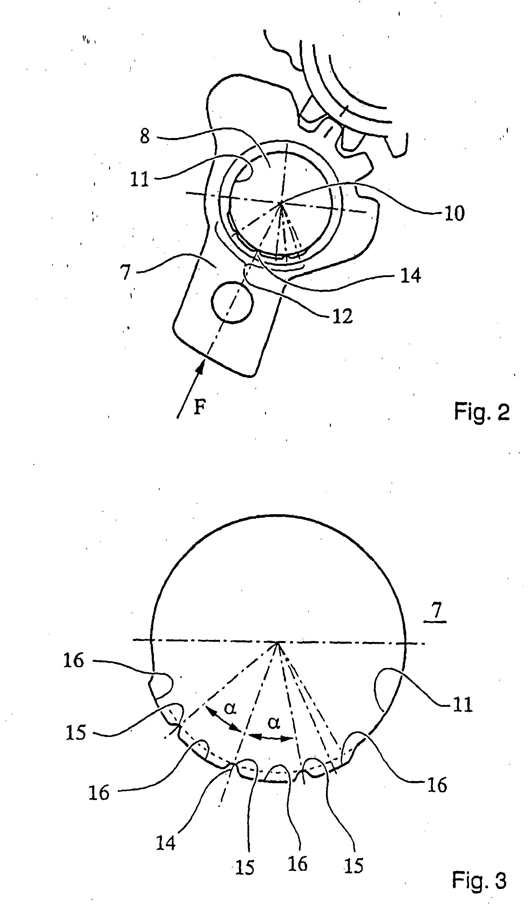

Auf den in Fig. 2 vergrößert dargestellten Sperrnocken 7 wird bereits bei normalem Gebrauch, im Besonderen jedoch bei unfallbedingter Überlast, eine Kraft F radial zur Drehachse 10 des Sperrnockens 7 ausgeübt, welche über den Bolzen 8 in die erste Befestigungslasche 2 abgeleitet wird. Die in den Sperrnocken 7 eingelassene Bohrung 11, in welche der Bolzen 8 eingeschoben wird, ist in einem Segment 12 ihres Innenumfangs mit einer Verzahnung 13 versehen. Das Segment 12 erstreckt sich beidseits der richtung des Kraftangriffspunkts 14 im Übergang zwischen Bolzen 8 und Sperrnocken 7 über einen Winkel α von jeweils 30°.

Wie aus Fig. 3 ersichtlich, werden die einzelnen Zähne 15 durch Ausnehmungen 16 jenseits des Innenumfangs der Bohrung 11 gebildet, ragen also nicht in diese hinein. Bei normalem Gebrauch wird die Drehbarkeit des Sperrnockens 7 auf dem Bolzen 8 somit nicht behindert. Übersteigt die radiale Kraft F hingegen ein normales Maß, graben sich die relativ harten Zähne 15 in den Außenumfang des relativ weicheren Bolzens 8 ein und wirken einer Drehung des Sperrnockens 7 durch Formschluss entgegen. Einem ungewollten Entriegeln des Systems wird hierdurch entgegengewirkt.

### Bezugszeichen

- 1: Verstelleinrichtung
- 2,3: Befestigungslasche
- 4: Verzahnung
- 5: Rastklinke
- 6: Gegenverzahnung
- 7: Sperrnocken
- 8: Bolzen
- 9: Zahnglied
- 10: Drehachse
- 11: Bohrung
- 12: Segment
- 13: Verzahnung
- 14: Kraftangriffspunkt
- 15: Zähne
- 16: Ausnehmung

## Patentansprüche

1. Verstellvorrichtung (1), insbesondere Neigungsverstellvorrichtung für die Rückenlehne eines Fahrzeugsitzes, mit einem auf einer ersten Baugruppe angeordneten Bolzen (8) und einer mittels dieses Bolzens drehbar gelagerten zweiten Baugruppe, auf welche eine Kraft (F) radial zur Drehachse (10) ausübbar ist, **dadurch gekennzeichnet, dass** die Drehbarkeit der zweiten Baugruppe relativ zur ersten Baugruppe durch einen mittels plastischer Verformung herbeiführbaren Formschluß zwischen dem Bolzen (8) und der ersten Baugruppe und/oder der zweiten Baugruppe herabsetzbar ist.

2. Verstellvorrichtung nach Anspruch 1, **dadurch gekennzeichnet, dass** der Bolzen (8) drehfest mit der ersten Baugruppe verbunden ist und der Formschluß zwischen dem Bolzen und der zweiten Baugruppe herbeiführbar ist.

3. Verstellvorrichtung nach Anspruch 1, **dadurch gekennzeichnet, dass** der Bolzen (8) drehfest mit der zweiten Baugruppe verbunden ist und der Formschluß zwischen dem Bolzen und der ersten Baugruppe herbeiführbar ist.

4. Verstellvorrichtung nach einem der Ansprüche 1 bis 3, **dadurch gekennzeichnet, dass** der Bolzen (8) in einer an ihrem Innenumfang zumindest partiell verzahnten Bohrung (11) in der ersten oder zweiten Baugruppe drehbar gelagert ist.

5. Verstellvorrichtung nach Anspruch 4, **dadurch gekennzeichnet, dass** der Innenumfang der Bohrung (11) zumindest im Bereich der Verzahnung (13) eine größere Härte als der Außenumfang des Bolzens (8) aufweist.

6. Verstellvorrichtung nach Anspruch 4 oder 5, **dadurch gekennzeichnet, dass** die Verzahnung (13) in einem Segment (12) des Innenumfangs der Bohrung (11) angeordnet ist, auf dessen Kreisbogen der Kraftangriffspunkt (14) der Kraft (F) unter Überlast etwa mittig angeordnet ist.

7. Verstellvorrichtung nach Anspruch 6, **dadurch gekennzeichnet, dass** sich das verzahnte Segment (12) beidseits des Kraftangriffspunkts (14) über einen Winkel kleiner 45°, vorzugsweise etwa 30°, erstreckt.

8. Verstellvorrichtung nach einem der vorhergehenden Ansprüche, **dadurch gekennzeichnet, dass** die Verstellvorrichtung (1) ein Rastneigungsversteller für die Rückenlehne eines Kraftfahrzeugsitzes ist, wobei die ersten Baugruppe eine mit der Rückenlehne verbundene erste Befestigungslasche (2) und die zweite Baugruppe ein Sperrnocken (7) ist, mittels dessen eine auf der ersten Befestigungslasche drehbar gelagerte Rastklinke (5) in Eingriff mit der Verzahnung (4) einer zweiten, gegenüber der ersten schwenkbaren Befestigungslasche (3) haltbar ist.

9. Fahrzeugsitz mit einer Verstellvorrichtung nach einem der vorhergehenden Ansprüche.

## Claims

1. Adjusting mechanism (1), especially a mechanism for adjusting the inclination of the backrest of a vehicle seat, comprising a bolt (8) which is disposed on a first sub-assembly and a second sub-assembly which is mounted so as to be rotatable by means of said bolt and to which a force (F) may be applied in a radial direction relative to the axis of rotation (10), **characterized in that** the rotatability of the second sub-assembly relative to the first sub-assembly may be reduced with the aid of a positive connection between the bolt (8) and the first sub-assembly and/or the second assembly, which may be created using plastic deformation.

2. Adjusting mechanism according to Claim 1, **characterized in that** the bolt (8) is connected fixedly in terms of rotation to the first sub-assembly and the positive connection may be created between the bolt and the second sub-assembly.

3. Adjusting mechanism according to Claim 1, **characterized in that** the bolt (8) is connected fixedly in terms of rotation to the second sub-assembly and the positive connection may be created between the bolt and the first sub-assembly.

4. Adjusting mechanism according to one of Claims 1 to 3, **characterized in that** the bolt (8) is rotatably mounted in a hole (11), which is at least partially toothed on its inner circumference, in the first or second sub-assembly.

5. Adjusting mechanism according to Claim 4, **characterized in that** the inner circumference of the hole (11) has, at least in the region of the toothed portion (13), a greater hardness than the outer circumference of the bolt (8).

6. Adjusting mechanism according to Claim 4 or 5, **characterized in that** the toothed portion (13) is disposed in a segment (12) of the inner circumference of the hole (11), the force application point (14) of the force (F) under overload being disposed approximately centrally on the circular arc thereof.

7. Adjusting mechanism according to Claim 6, **characterized in that** the toothed segment (12) extends on either side of the force application point (14) of the force (F) over an angle of less than 45º, preferably approximately 30º.

8. Adjusting mechanism according to one of the preceding claims, **characterized in that** the adjusting mechanism (1) is a locking mechanism for adjusting the inclination of the backrest of a motor vehicle seat, the first sub-assembly being a first fixing plate (2) connected to the backrest and the second sub-assembly being a locking cam (7), by means of which a latching pawl (5) rotatably mounted on the first fixing plate may be held in engagement with the toothed portion (4) of a second fixing plate (3) which may be pivoted relative to the first fixing plate.

9. Vehicle seat with an adjusting mechanism according to one of the preceding claims.

## Revendications

1. Dispositif de réglage (1), notamment dispositif de réglage d'inclinaison pour le dossier d'un siège de véhicule, comprenant un goujon (8) prévu sur un premier module, et un deuxième module monté à rotation au moyen de ce goujon, sur lequel peut s'exercer une force (F) radialement par rapport à l'axe de rotation (10), **caractérisé en ce que** la rotation du deuxième module par rapport au premier module peut être réduite par un engagement par coopération géométrique entre le goujon (8) et le premier module et/ou le deuxième module, provoqué par une déformation plastique.

2. Dispositif de réglage selon la revendication 1, **caractérisé en ce que** le boulon (8) est connecté de manière solidaire en rotation au premier module et l'engagement par coopération géométrique peut être provoqué entre le goujon et le deuxième module.

3. Dispositif de réglage selon la revendication 1, **caractérisé en ce que** le boulon (8) est connecté de manière solidaire en rotation au deuxième module et l'engagement par coopération géométrique peut être provoqué entre le goujon et le premier module.

4. Dispositif de réglage selon l'une quelconque des revendications 1 à 3, **caractérisé en ce que** le goujon (8) est monté de manière rotative dans un alésage (11) au moins partiellement denté sur sa circonférence interne, dans le premier ou le deuxième module.

5. Dispositif de réglage selon la revendication 4, **caractérisé en ce que** la circonférence interne de l'alésage (11) présente, au moins dans la région de la denture (13), une plus grande dureté que la circonférence externe du goujon (8).

6. Dispositif de réglage selon la revendication 4 ou 5, **caractérisé en ce que** la denture (13) est disposée dans un segment (12) de la circonférence interne de l'alésage (11), sur le cercle partiel duquel le point d'application de force (14) de la force (F) est disposé approximativement centralement sous l'effet d'une surcharge.

7. Dispositif de réglage selon la revendication 6, **caractérisé en ce que** le segment denté (12) s'étend de part et d'autre du point d'application de force (14) sur un angle inférieur à 45°, de préférence d'environ 30°.

8. Dispositif de réglage selon l'une quelconque des revendications précédentes, **caractérisé en ce que** le dispositif de réglage (1) est un dispositif de réglage d'inclinaison par encliquetage pour le dossier d'un siège de véhicule, le premier module étant une première patte de fixation (2) associée au dossier et le deuxième module étant une came de verrouillage (7), au moyen de laquelle un cliquet d'arrêt (5) monté à rotation sur la première patte de fixation peut être maintenu en prise avec la denture (4) d'une deuxième patte de fixation (3) pouvant pivoter par rapport à la première.

9. Siège de véhicule comprenant un dispositif de réglage selon l'une quelconque des revendications précédentes.
